# EUROPÄISCHE PATENTSCHRIFT

(11) **EP 2 165 825 B1**
(45) Veröffentlichungstag und Bekanntmachung des Hinweises auf die Patenterteilung: **18.04.2012**
(21) Anmeldenummer: 09163870.0
(22) Anmeldetag: 26.06.2009
(51) Int. Cl.: B29D 30/32, B29D 30/34

(54) **Vorrichtung zum Andrücken eines Balges gegen eine Seitenwand eines Reifenrohlings bei einer Reifenherstellung**
Device for pressing bellow against a side wall of a tyre blank when producing a tyre
Dispositif de serrage d'un soufflet contre le flanc latéral d'une ébauche de pneu dans le cadre d'une fabrication de pneus

(30) Priorität: 20.09.2008 DE 102008048176
(43) Veröffentlichungstag der Anmeldung: 24.03.2010
(73) Patentinhaber: Continental Reifen Deutschland GmbH, 30165 Hannover (DE)
(72) Erfinder: Linne, Stefan, 30900 Wedemark (DE); Pawlik, Karl-Heinz, 30455 Hannover (DE); Lubitz, Frank, 31867 Lauenau (DE)
(74) Vertreter: Finger, Karsten

(56) Entgegenhaltungen:
- WO-A-2008/001154
- DE-B- 1 097 123
- US-A- 2 986 196
- US-A- 4 705 589
- US-A- 4 923 553
- US-A- 5 660 677

## Beschreibung

Die Erfindung betrifft eine Vorrichtung zum Andrücken eines Balges gegen eine Seitenwand eines Reifenrohlings bei einer Reifenherstellung, gemäß dem Oberbegriff des Patentanspruchs 1.

Bei der Reifenherstellung dienen sogenannte Pusherglocken bei einer Reifenaufbaumaschine dazu, beim Umschlagen der Einlage um den Reifenkern mittels eines Balges diesen Balg von der Seite gegen den Rohling zu drücken. Die Glocke besitzt zum Anpressen eine schräge Anpressfläche. Bei jedem Zollgrößenwechsel an der Reifenaufbaumaschine ist es bislang erforderlich, Bauteile der Pusherglocke dimensionsabhängig auszuwechseln. Dieser Umstand erhöht erheblich die Umrüstzeiten an der Reifenaufbaumaschine und verringert die Produktionsstückzahlen.

Die US 4 923 553 offenbart eine Vorrichtung mit einer Reifenaufbautrommel zum Herstellen von Fahrzeugreifen bei denen verstellbare Segmente eingesetzt werden. Die DE 10 97 123 B, US-A-2 986 196, US-A-4 705 589, US-A-5 660677 sowie WO 2008/001154A offenbaren weitere Vorrichtungen zum Herstellen von Fahrzeugreifen.

Der Erfindung lag die Aufgabe zugrunde, eine Vorrichtung bereitzustellen, mit dem die Umrüstzeiten bei der Reifenherstellung wesentlich reduziert werden.

Gelöst wird die Aufgabe durch eine Vorrichtung nach Anspruch 1.

Ein Vorteil der Erfindung ist insbesondere darin zu sehen, dass die Glocke bzw. die Pusherglocke der jeweilig benötigten Reifengröße angepasst werden kann. Die Glocken bzw. einzelne Bauteile der Vorrichtung müssen nunmehr bei einem Dimensionswechsel der Reifengröße nicht mehr ausgewechselt werden. Über den erfindungsgemäßen Verstellmechanismus wird der Durchmesser der Glocken auf den jeweils erforderlichen

Durchmesser eingestellt. Die Vorrichtung bietet somit den Vorteil, dass in Verbindung mit den variabel einstellbaren Glocken unterschiedliche Reifen mit unterschiedlichen Reifendimensionen flexibel hergestellt werden können. Da kein Werkzeugwechsel mehr erforderlich ist, besitzt die Vorrichtung somit bei einer hohen Flexibilität ebenfalls eine hohe Produktivität.

Gemäß der Erfindung ist vorgesehen, dass das Hebelsystem jeweils einen ersten und einen zweiten Hebel umfasst, die über einen Drehpunkt mit den einzelnen Segmenten gekoppelt sind. Durch dieses Hebelsystem wird an den einzelnen Segmenten jeweils eine im Wesentlichen ähnliche Kraft eingeleitet. Dadurch werden alle Segmente in einem gleichen konstanten Abstand zueinander ineinander geschoben.

In einer vorteilhaften Weiterbildung der Erfindung ist vorgesehen, dass die Segmente beim Verkleinern des Durchmessers der Glocke ineinander greifen. Auf diese Weise wird der Durchmesser der Glocke effektiv verkleinert, ohne dass sich dabei die einzelnen Segmente der Glocke gegenseitig behindern.

In einer weiteren vorteilhaften Weiterbildung der Erfindung ist vorgesehen, dass die Segmente kammartig ineinander greifen. Die kammartige Form der Segmente bietet den Vorteil, dass die Glocke eine insgesamt gleichmäßig verteilte Anpressfläche besitzt. Dadurch drückt die Glocke insgesamt gleichmäßig gegen den aufgeblähten Balg.

In einer weiteren vorteilhaften Weiterbildung der Erfindung ist vorgesehen, dass die Segmente untereinander durch Führungsstangen verbunden sind. Die Führungsstangen bieten den Vorteil, dass die einzelnen Segmente gleichmäßig und blendenartig ineinander greifen. Außerdem wird ein Auseinanderdriften der einzelnen Segmente verhindert.

In einer weiteren vorteilhaften Weiterbildung der Erfindung ist vorgesehen, dass die Führungsstange auf einem seiner Enden an einem der Segmente fest verbunden und auf dem gegenüberliegenden Ende frei beweglich in einem daneben angeordneten Segment gelagert ist. Durch diese Art der Lagerung werden die Segmente gleichmäßig zueinander verfahren, wodurch der Durchmesser der Glocke gleichmäßig verkleinert bzw. vergrößert wird.

In einer weiteren vorteilhaften Weiterbildung der Erfindung ist vorgesehen, dass der erste Hebel über einen Drehpunkt mit einem Außenring verbunden ist. Der Außenring dient dazu, das Hebelsystem insgesamt effektiv zu lagern und zu bewegen.

In einer weiteren vorteilhaften Weiterbildung der Erfindung ist vorgesehen, dass der zweite Hebel über einen Drehpunkt mit einem Innenring verbunden ist. An dem Innenring ist der zweite Hebel über einen Drehpunkt effektiv gelagert.

In einer weiteren vorteilhaften Weiterbildung der Erfindung ist vorgesehen, dass der Innenring und der Außenring gegeneinander beweglich angeordnet sind und bei einer relativen Bewegung des Innenringes zum Außenring zueinander das Hebelsystem auseinander fährt, wodurch die einzelnen Segmente ineinander greifen und dabei der Durchmesser der Glocke verkleinert wird. Die relative Bewegung des Innenrings in Bezug auf den feststehenden Außenring lässt sich auf einfache Weise über einen Motorantrieb realisieren. Dadurch wird mit einem geringen konstruktiven Aufwand das Auseinanderbewegen des Hebelsystems gewährleistet.

Anhand eines Ausführungsbeispiels soll die Erfindung näher erläutert werden. Es zeigen:
- Fig. 1:: eine Prinzipsskizze der Vorrichtung in Verbindung mit der Reifenaufbautrommel
- Fig. 2:: die Vorrichtung in einer ersten Arbeitsposition
- Fig. 3 und Fig. 4:: die Vorrichtung in weiteren Arbeitspositionen
- Fig. 5:: eine Seiteneinsicht eines Teilausschnittes der Glocke, bei der die Segmente eingefahren sind
- Fig. 6:: eine zweite Seitenansicht, bei der die Segmente der Glocke ausgefahren sind
- Fig. 7:: eine Schnittansicht, bei der das Hebelsystem dargestellt ist.

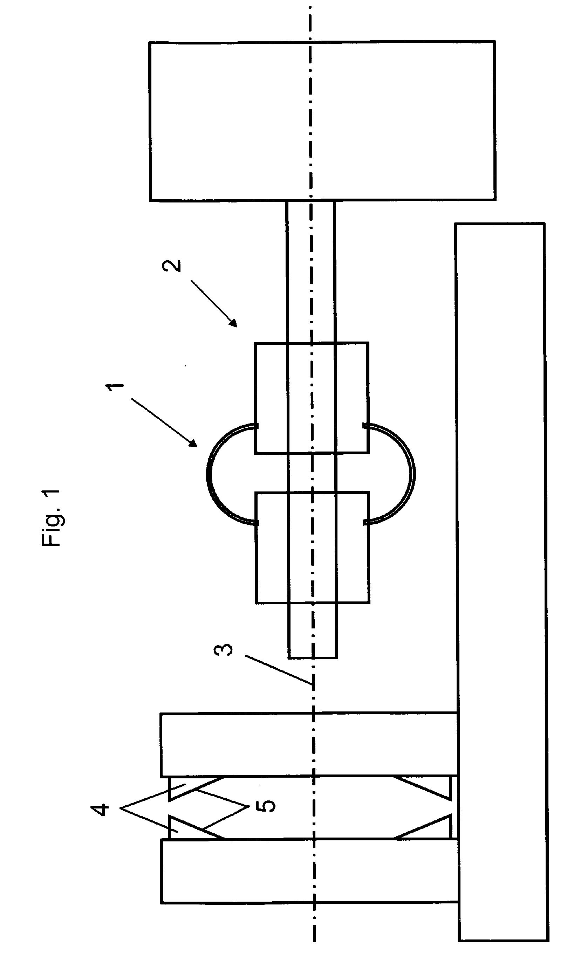

Die Figur 1 zeigt die Vorrichtung in einer Grundstellung. Die beiden Glocken 4 bzw. Pusherglocken 4 sind auf der linken Bildhälfte angeordnet. Die Pusherglocken 4 besitzen jeweils schräge Anpressflächen 5. Der Reifenrohling 1 ist auf der Reifenaufbautrommel 2 angeordnet, die um die Trommelachse 3 rotiert.

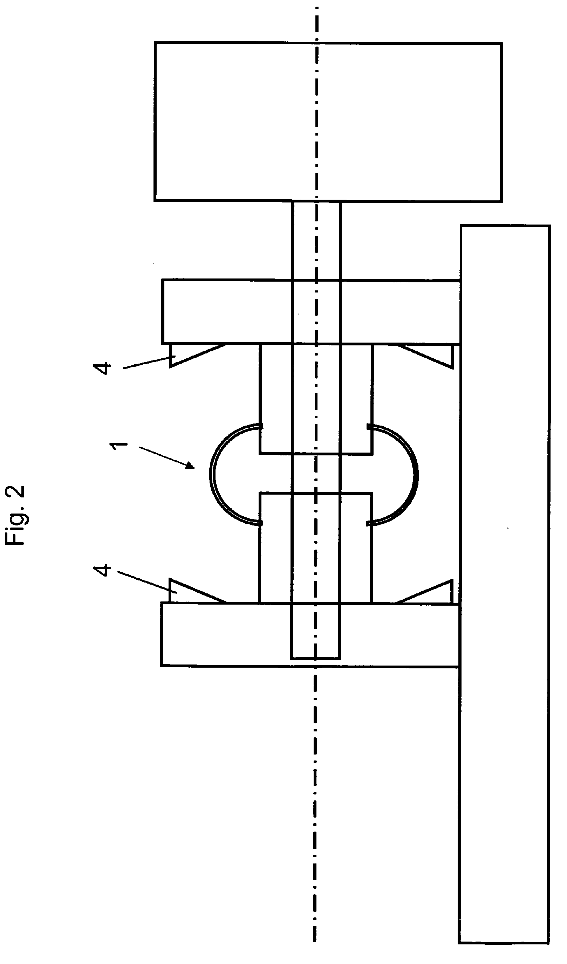

Die Figur 2 zeigt die Vorrichtung in einer ersten Arbeitsposition, wobei die beiden Glocken 4 jeweils links und rechts vom Reifenrohling 1 angeordnet werden.

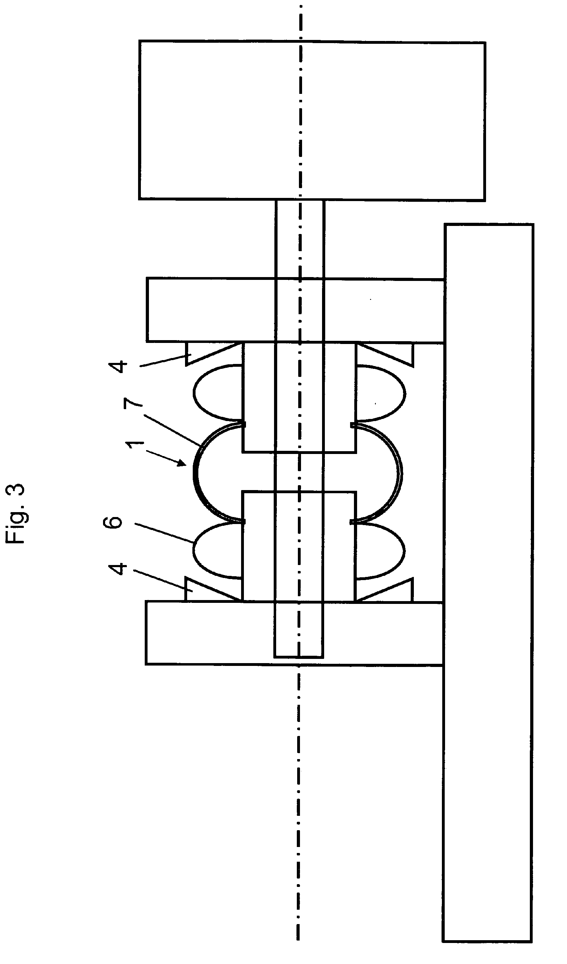

Die Figur 3 zeigt einen weiteren Arbeitsschritt, bei dem die Bälge 6, die an der Reifenaufbautrommel angeordnet sind, aufgebläht werden. Dieses Aufblähen dient insbesondere dazu, die nicht dargestellte Einlage um den Reifenkern des Reifenrohlings 1 herumzuschlagen. Die Einlage soll dabei fest mit der Seite 7 des Reifenrohlings 1 verbunden werden.

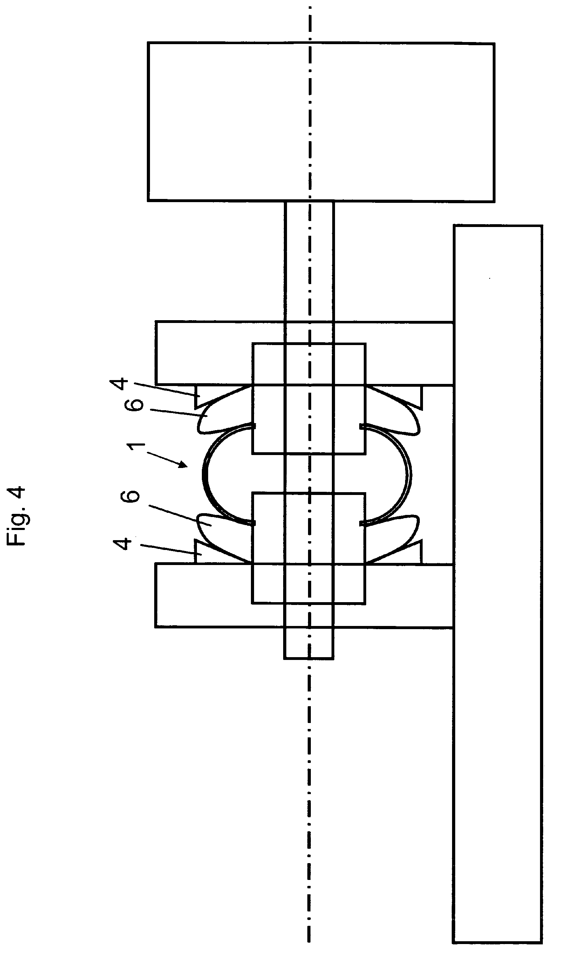

Die Figur 4 zeigt eine weitere Arbeitsposition der Vorrichtung, bei der die Glocken 4 gegen die Bälge 6 gedrückt werden, die wiederum die Einlage oder die Seitenwand des Reifenrohlings fest mit der entsprechenden Fläche des Reifenrohlings verbinden. Anschließend fährt die Vorrichtung wieder in ihre Ausgangslage zurück.

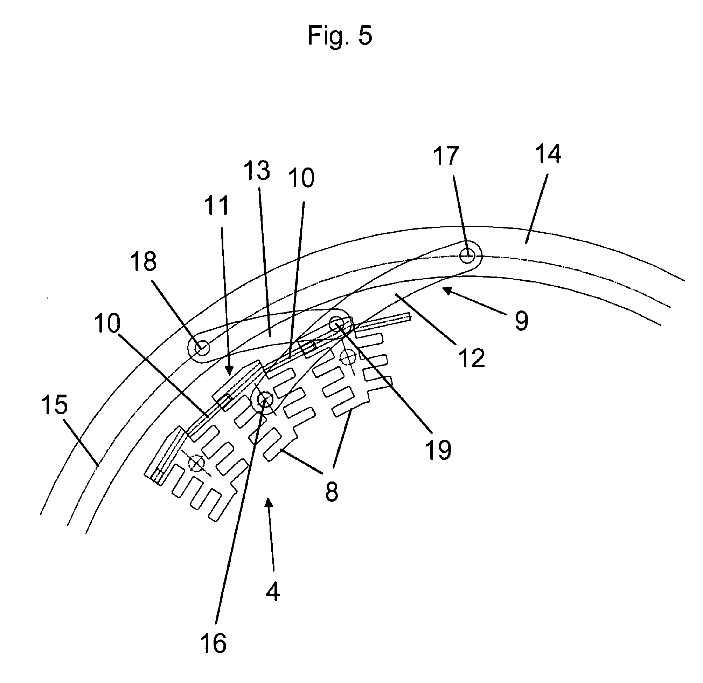

Die Figur 5 zeigt einen Teilausschnitt der Vorrichtung. Die insgesamt kreisförmige Glocke 4 wird aus einzelnen Segmenten 8 gebildet, wobei in dieser Darstellung nur drei Segmente 8 dargestellt sind. Die Segmente 8 sind kammartig ausgebildet und greifen jeweils neben einander liegend in entsprechende Aussparungen des jeweiligen Segmentes 8 ein. Die Führungsstangen 10 bilden Verbindungsglieder, die die nebeneinander liegenden Segmente 8 miteinander verbinden. Die Führungsstange 10 ist auf einer Seite fest mit dem jeweiligen Segment 8 verbunden. Auf der gegenüberliegenden Seite wird die Führungsstange 10 in einer Aussparung des daneben angeordneten Segmentes 8 geführt. Das Hebelsystem 9 besteht aus einem ersten Hebel 12 und einem zweiten Hebel 13. Der erste Hebel 12 ist über einen Drehpunkt an einem der Segmente 8 gelagert. An dem gegenüberliegenden Ende ist der erste Hebel 12 über einen Drehpunkt 17 am Außenring 14 gelagert. Der zweite Hebel 13 des Hebelsystems 9 ist über den Drehpunkt 19 am ersten Hebel gelagert. Der zweite Hebel 13 ist auf der gegenüberliegenden Seite über den Drehpunkt 18 an einem schematisch dargestellten Innenring 15 gelagert. Jedes Segment 8 ist über ein entsprechendes Hebelsystem 9 mit dem Innenring 15 und dem Außenring 14 verbunden, wobei in dieser Figur nur ein Hebelsystem der Einfachheit halber dargestellt ist.

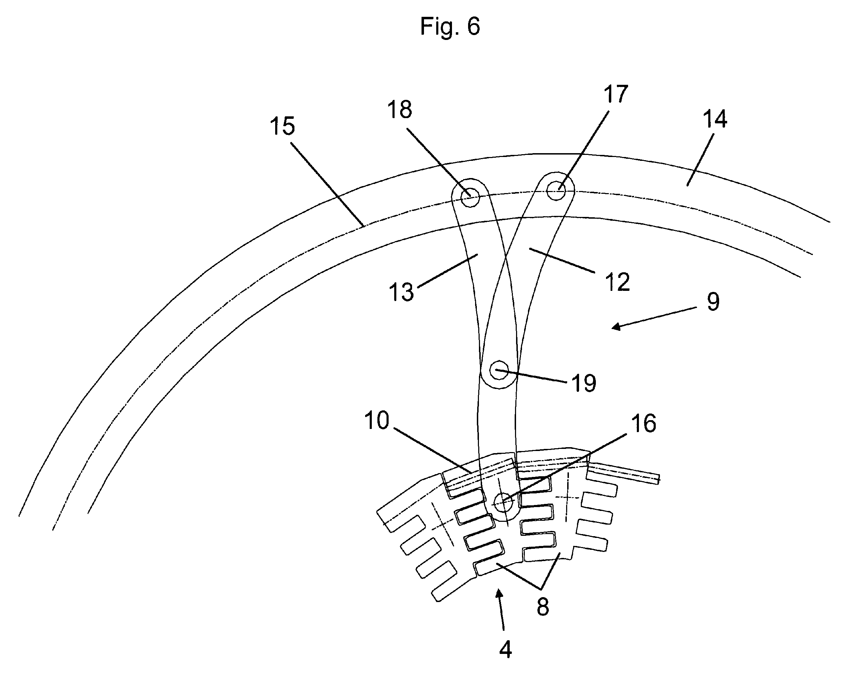

Die Figur 6 zeigt die Arbeitsposition der Glocke 4, bei der die Segmente 8 kammartig ineinander gefahren sind. Bei dieser Arbeitsposition der Glocke 4 besitzt die Glocke einen gegenüber der Arbeitsposition in Figur 5 verkleinerten Durchmesser. In dieser Arbeitsposition wird die Glocke 4 insb. dazu genutzt, kleinere Reifendimensionen herzustellen. Das Ineinanderfahren der Segmente 8 wird durch die jeweils angekoppelten Hebelsysteme 9 realisiert. Das Hebelsystem 9 wird durch ein relatives Verdrehen des Innenringes 15 zum Außenring 14 bewegt. Das Hebelsystem 9 ist jeweils über den Drehpunkt 18 mit dem Innenring 15 und über den Drehpunkt 17 mit dem Außenring 14 gekoppelt. Durch die relative Bewegung des Innenrings 15 zum Außenring 14 wird der erste Hebel 12 gegen den zweiten Hebel 13 verschoben. Dadurch werden die Segmente 8 zur Mitte hin bewegt und dabei gleichzeitig kammartig ineinander bewegt. Die Führungsstangen 10 gewährleisten bei dieser Bewegung, dass die Segmente 8 nicht auseinander driften.

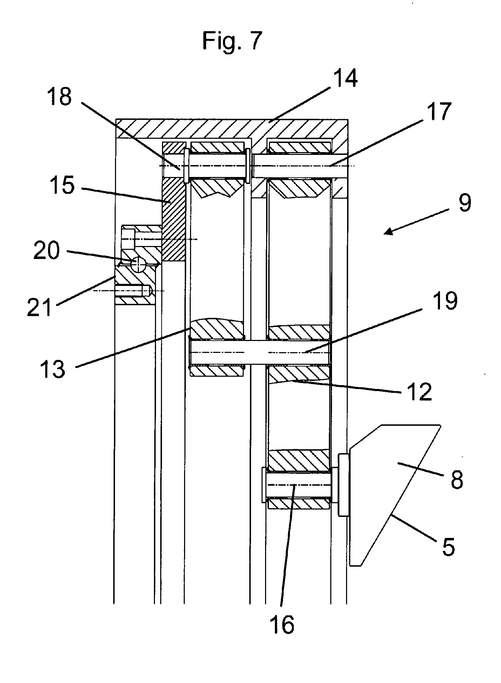

Die Figur 7 zeigt eine Schnittansicht des Teilbereiches der Vorrichtung in Figur 5. Im Wesentlichen ist das Hebelsystem 9 in seiner Funktion dargestellt. Das Segment 8 der Glocke, in dieser Ansicht als Seitenansicht dargestellt, ist im Drehpunkt 16 mit dem ersten Hebel 12 verbunden. Dieser Hebel 12 ist im Drehpunkt 17 mit dem Außenring 14 verbunden und dort gelagert. Der Außenring 14 ist bei diesem Ausführungsbeispiel das feststehende Element, welches fest mit einem nicht dargestellten Rahmen gekoppelt ist. Der erste Hebel 12 ist über den Drehpunkt 19 mit dem zweiten Hebel 13 gekoppelt. Dieser zweite Hebel 13 ist über den Drehpunkt 18 mit dem Innenring 15 gekoppelt. Der Innenring 15 und der Außenring 14 können relativ zueinander gegeneinander verschoben werden, wodurch das Hebelsystem 9 auseinander bewegt wird. Der Innenring 15 ist drehbar über das Kugellager 20 an einem Rahmenelement 21 gelagert. Das Verdrehen des Innenringes 15 wird über einen nicht dargestellten Motor realisiert, der an den Innenring 15 angekoppelt ist.

### Bezugszeichenliste

### (ist Teil der Beschreibung)

- 1: Reifenrohling
- 2: Reifenaufbautrommel
- 3: Trommelachse
- 4: Glocke
- 5: Anpressfläche
- 6: aufgeblähter Balg
- 7: Seite des Reifenrohlings
- 8: Segmente der Glocke
- 9: Hebelsystem
- 10: Führungsstangen
- 11: freibewegliche Lagerung der Führungsstange im Segment
- 12: erster Hebel
- 13: zweiter Hebel
- 14: Innenring (feststehender Ring)
- 15: Außenring
- 16: Drehpunkt zum Segment
- 17: Drehpunkt zum Außenring
- 18: Drehpunkt zum Innenring
- 19: Drehpunkt zwischen ersten und zweiten Hebel
- 20: Kugellager zwischen Außenring und Innenring
- 21: Rahmenelement

## Patentansprüche

1. Vorrichtung zum Andrücken eines Balges (6) gegen eine Seitenwand eines Reifenrohlings (1) bei einer Reifenherstellung,
wobei die Vorrichtung eine Glocke (4) mit einer Anpressfläche (5) zum Andrücken des aufgeblähten Balges (6) an den Reifenrohling (1) aufweist,
wobei die Glocke (4) von der Seite des Reifenrohlings (1) gegen den Balg (6) verfahren wird und **dadurch** einen Anpressdruck aufbringt,
wobei der Anpressdruck einen Teil einer Einlage oder der Seitenwand fest mit dem Reifenrohling (1) verbindet,
die Glocke (4) eine Vielzahl einzelner Segmente (8) aufweist und über ein Hebelsystem (9) der Durchmesser der Glocke (4) variabel einstellbar ist **dadurch gekennzeichnet, dass**
das Hebelsystem (9) jeweils einen ersten (12) und einen zweiten Hebel (13) umfasst, die über einen Drehpunkt (19) mit den einzelnen Segmenten (8) gekoppelt sind.

2. Vorrichtung nach Anspruch 1,
**dadurch gekennzeichnet, dass**
die Segmente (8) beim Verkleinern des Durchmessers der Glocke (4) ineinander greifen.

3. Vorrichtung nach Anspruch 1,
**dadurch gekennzeichnet, dass**
die Segmente (8) kammartig ineinander greifen.

4. Vorrichtung nach Anspruch 1 oder 2,
**dadurch gekennzeichnet, dass**
die Segmente (8) untereinander durch Führungsstangen (10) verbunden sind.

5. Vorrichtung nach einem der vorhergehenden Ansprüche,
**dadurch gekennzeichnet, dass**
die Führungsstange (10) auf einem seiner Enden an einem der Segmente (8) fest verbunden und auf dem gegenüberliegenden Ende frei beweglich in einem daneben angeordneten Segment (8) gelagert ist.

6. Vorrichtung nach einem der vorhergehenden Ansprüche,
**dadurch gekennzeichnet, dass**
der erste Hebel (12) über einen Drehpunkt (17) mit einen Außenring (15) verbunden ist.

7. Vorrichtung nach einem der vorhergehenden Ansprüche,
**dadurch gekennzeichnet, dass**
der zweite Hebel (13) über einen Drehpunkt (18) mit einen Innenring (14) verbunden ist.

8. Vorrichtung nach einem der vorhergehenden Ansprüche,
**dadurch gekennzeichnet, dass**
der Innenring (14) und der Außenring (15) gegeneinander beweglich angeordnet sind und bei einer relativen Bewegung des Innenringes (14) zum Außenring (15) zueinander das Hebelsystem (9) auseinander fährt, wodurch die einzelnen Segemente (8) ineinander greifen und dabei der Durchmesser der Glocke (4) verkleinert wird.

## Claims

1. Device for pressing a bladder (6) against a sidewall of a tyre blank (1) when producing a tyre, the device having a bell (4) with a pressing surface (5) for pressing the inflated bladder (6) against the tyre blank (1),
the bell (4) being moved against the bladder (6) from the side of the tyre blank (1) and thereby applying a pressing pressure,
the pressing pressure firmly connecting part of an insert or of the sidewall to the tyre blank (1), the bell (4) having a multiplicity of individual segments (8) and the diameter of the bell (4) being variably adjustable by means of a lever system (9), **characterized in that**
the lever system (9) respectively comprises a first lever (12) and a second lever (13), which are coupled to the individual segments (8) by means of a pivot point (19).

2. Device according to Claim 1, **characterized in that** the segments (8) engage in one another as the diameter of the bell (4) reduces.

3. Device according to Claim 1, **characterized in that** the segments (8) engage in one another in a comb-like manner.

4. Device according to Claim 1 or 2, **characterized in that** the segments (8) are connected to one another by guiding rods (10).

5. Device according to one of the preceding claims, **characterized in that** the guiding rod (10) is firmly connected at one of its ends to one of the segments (8) and at the opposite end is mounted freely movably in a segment (8) arranged alongside said first segment.

6. Device according to one of the preceding claims, **characterized in that** the first lever (12) is connected to an outer ring (15) by means of a pivot point (17).

7. Device according to one of the preceding claims, **characterized in that** the second lever (13) is connected to an inner ring (14) by means of a pivot point (18).

8. Device according to one of the preceding claims, **characterized in that** the inner ring (14) and the outer ring (15) are arranged movably with respect to one another and, when there is a relative movement of the inner ring (14) in relation to the outer ring (15), the lever system (9) moves apart, whereby the individual segments (8) engage in one another and the diameter of the bell (4) is thereby reduced.

## Revendications

1. Dispositif destiné à repousser un soufflet (6) contre la paroi latérale d'une ébauche (1) de bandage de roue lors de la fabrication du bandage de roue,
le dispositif présentant une cloche (4) dotée d'une surface de poussée (5) destinée à repousser le soufflet (6) gonflé contre l'ébauche (1) de bandage de roue,
la cloche (4) étant déplacée contre le soufflet (6) par le côté de l'ébauche (1) de bandage de roue et appliquant ainsi une pression de poussée,
la pression de poussée reliant solidairement une partie de la garniture ou de la paroi latérale à l'ébauche (1) de bandage de roue,
la cloche (4) présentant plusieurs segments distincts (8) et le diamètre de la cloche (4) pouvant être ajusté de manière variable par l'intermédiaire d'un système (9) de leviers,
**caractérisé en ce que**
le système (9) de leviers comporte un premier levier (12) et un deuxième levier (13) accouplés aux différents segments (8) par l'intermédiaire d'un centre de rotation (19).

2. Dispositif selon la revendication 1, **caractérisé en ce que** les segments (8) s'engagent l'un dans l'autre lorsque le diamètre de la cloche (4) diminue.

3. Dispositif selon la revendication 1, **caractérisé en ce que** les segments (8) s'engagent les uns dans les autres en peigne.

4. Dispositif selon les revendications 1 ou 2, **caractérisé en ce que** les segments (8) sont reliés les uns aux autres par des tringles de guidage (10).

5. Dispositif selon l'une des revendications précédentes, **caractérisé en ce que** les tringles de guidage (10) sont reliées solidairement à un segment (8) respectif par une de leurs extrémités et sont montés à déplacement libre dans un segment (8) disposé à côté à leur extrémité opposée.

6. Dispositif selon l'une des revendications précédentes, **caractérisé en ce que** le premier levier (12) est relié à une bague extérieure (15) par l'intermédiaire d'un centre de rotation (17).

7. Dispositif selon l'une des revendications précédentes, **caractérisé en ce que** le deuxième levier (13) est relié à une bague intérieure (14) par l'intermédiaire d'un centre de rotation (18).

8. Dispositif selon l'une des revendications précédentes, **caractérisé en ce que** la bague intérieure (14) et la bague extérieure (15) sont disposées de manière à pouvoir se déplacer l'une par rapport à l'autre de telle sorte que lorsque la bague intérieure (14) se déplace par rapport à la bague extérieure (15), le système (9) de leviers s'ouvre, grâce à quoi les différents segments (8) s'engagent les uns dans les autres et le diamètre de la cloche (4) est diminué.
